# EUROPEAN PATENT APPLICATION

(11) **EP 0 999 500 A1**
(43) Date of publication of application: **10.05.2000**
(21) Application number: 99308403.7
(22) Date of filing: 25.10.1999
(51) Int. Cl.: G06F 12/08

(54) **Application-reconfigurable split cache memory**

(30) Priority: 06.11.1998 US 187866
(71) Applicant: LUCENT TECHNOLOGIES INC., Murray Hill, New Jersey 07974-0636 (US)
(72) Inventor: Nicol, Christopher John, New South Wales (AU); Singh, Kanwar Jit, Matawan, New Jersey 07747 (US); Terman, Christopher J., Newton Center, Massachusetts 02159 (US); Williams, Joseph, Holmdel, New Jersey07733 (US)
(74) Representative: Watts, Christopher Malcolm Kelway, Dr.

(57) **Abstract**

Substantial advantages are realized from a processing element architecture that allows a local memory to be divided almost at will between an instruction cache portion, an instruction SRAM portion, a data SRAM portion, and a conventional data cache portion. The processing element comprises a processor and a memory module. The memory module comprises a plurality of memory submodules with associated interface circuitry, a controller, and at least one configuration register, which controls a particular memory submodule, is employed as an instruction submodule or a data submodule. In embodiments where there is a second configuration register, it controls whether a particular memory submodule is employed as a cache submodule or as an SRAM. Having the configuration registers addressable allows application programs to control the number of memory submodules that are assigned to different modes. In the illustrated embodiment, the processor can over-ride the SRAM/cache memory assignments of the configuration register. Providing a 2-port access, this architecture offers its advantages to Harvard-architecture processors.

## Description

### Background of the Invention

This relates to memories, and more particularly to integrated circuit cache memories.

A cache memory is typically a small amount of high speed static random access memory (SRAM) located close to a microprocessor, which aims to provide the microprocessor with frequently used instructions and data. Harvard-architecture central processing units (CPUs), like most modern reduced instruction set computer (RISC) CPU's, have separate instruction and data access mechanisms and, therefore, are generally connected to separate instruction and data cache memories. The amount of instruction and data cache that is usefully employed by a microprocessor varies according on the access patterns of the program codes that are executed by the computer. For example, control code tends to be instruction intensive, requiring a large amount of instruction cache. On the other hand, inner-loop code for a digital signal processor (DSP) application requires very little instruction cache but a large amount of data cache. For this reason processors generally include more than is expected to be needed of both types of cache. As multiple processors are being integrated onto a single chip with a cache memories, and a computer is constructed with cache memories outside the chip, forming a hierarchical arrangement of cache memories, the size of the first level caches must be kept small to reduce area and increase speed. The challenge is to maximize the utilization of the small amount of local memory. Since cache utilization is application-dependent, there is a need for a dynamically reconfigurable cache memory that can provide varying amounts of instruction and data cache.

U.S. Patent No. 5,651,134 issued July 1997 describes an arrangement where a controller of a cache memory can set configuration bits to provide for an associated processor to store either data, or instructions, or both, within the cache memory. Each time the configuration is changed, the cache is flushed. This cache memory is preferably a second or third level cache memory. No information is provided as to the regimen that is employed by the cache controller as to when and how the cache memory is reconfigured. Nor is there any detail as to how the cache memory is partitioned when both data and instructions are to be stored in the cache.

U.S. Patent No. 5,410,669 issued April 1995, describes a cache memory for a single-bus system, which achieves an advantage by realizing that an underutilized cache memory can be created from cache modules, and unutilized modules can be fashioned to respond to conventional RAM bank addresses. Indeed, not only the portion of the cache memory that stores data or instructions can be used, but also the portion of the cache memory that stores the tag information can be used. Thus, the patent describes an arrangement where a memory includes a number of modules and each module can be configured either as a local data SRAM or as a cache memory. It cannot be usefully employed in connection with a Harvard-architecture processor.

Aside from the advantage that may be derived from using fast memory that is in close proximity to a processing element and which is underutilized in a particular application, there are situations where it is desirable to quickly retrieve data that, for various reasons, is not stored in cache memory. An example of such a situation is of a program that needs to maintain a number of registers, such as the variables of a "do loop". While such registers can be kept in normal remote RAM, in multi-processor arrangements where the remote RAM may need to respond to more than one processor it might not be able to respond quickly, for example, in case of a access collision.

### Summary of the Invention

Accordingly, it is desirable to actually assign a portion of the local memory to conventional memory duties (henceforth labeled SRAM memory), and a portion to cache duties (henceforth labeled cache memory). More specifically, substantial advantages are realized from a processing element architecture that allows a local memory to be divided almost at will between an instruction cache portion, a conventional data cache portion, an instruction SRAM portion, and a data SRAM portion. The processing element comprises a processor and a memory module. The memory module comprises a plurality of memory submodules with associated interface circuitry, a controller, and at least one configuration register that controls whether a particular memory submodule is employed as an instruction submodule or a data submodule. Embodiments of the invention may employ a second configuration register that controls whether a particular memory submodule is employed as a cache submodule or as an SRAM. Having the configuration registers addressable allows application programs to control the number of memory submodules that are assigned to different modes. In an illustrated embodiment, the processor can over-ride the SRAM/cache memory assignments of the configuration register. Providing a 2-port access, this architecture offers its advantages to Harvard-architecture processors.

### Brief Description of the Drawing

FIG. 1 presents an overview block diagram of a processing element in conformance with the principles of this invention;
FIG. 2 shows a block diagram depicting the submodules, the controller and the configuration registers of the FIG. 1 processing element;
FIG. 3 presents a schematic diagram of a FIG. 2 interface circuit; and
FIG. 4 depicts one stage of a stack that computes the least-recently-used memory module for both instruction cache applications and data cache applications.

### Detailed Description

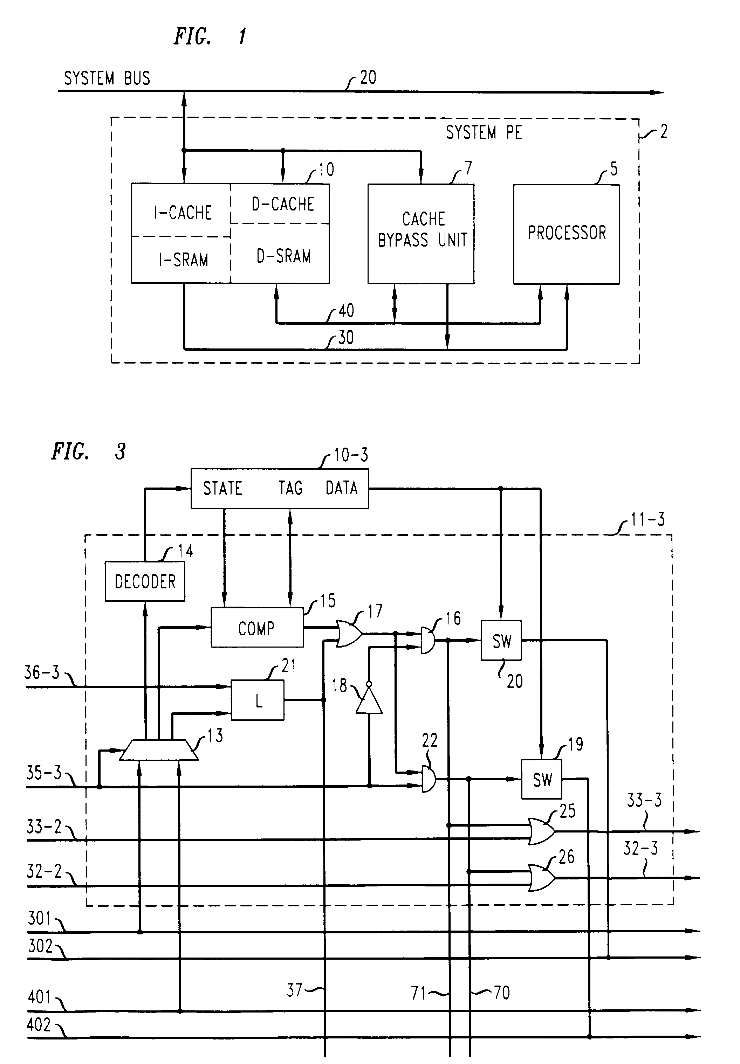

FIG. 1 shows a processing element (PE) 2 that contains a cache memory module 10 coupled to a Harvard-architecture processor 5. Memory module 10 includes one port that is connected to the instruction port of processor 5 through instruction bus 30, and a second port that is connected to the data port of processor 5 through data bus 40. Additionally, cache memory 10 is connected to a system bus 20, which is extended for coupling to other system elements, such as other processing elements 2 and system memory. System bus 20 is connected to busses 30 and 40 through a cache bypass unit 7. System bus 20 is used for transferring instructions and data between cache memory 10 and system memory, and between cache memory 10 and the cache memories of other processing elements 2. On occasions, bypass unit 7 may be used to transfer instructions from system bus 20 to processor 5 through instruction bus 30. On other occasions, bypass unit 7 may be used to transfer data between system bus 20 and processor 5 through data bus 40. Busses 20, 30 and 40 each have address lines and information lines. In accordance with the principles of this invention, cache memory module 10 is reconfigurable, under software control, to provide an instruction cache memory, and/or a conventional (data) cache memory, a local instruction SRAM, and/or a local data SRAM. The delineation between the different types of memory is shown diagrammatically in FIG. 1 by the dashed lines within module 10.

FIG. 2 shows a block diagram of the memory module 10 arrangement, comprising N memory submodules 10-1, 10-2, 10-3, ..., 10-N. The memory submodules are coupled to buses 20, 30 and 40 through interface circuits 11-1, 11-2, 11-3, ..., 11-N, and the interface circuits are each connected to different bits of configuration registers 60 and 61. A bit from configuration register 60 controls whether a memory submodule 10 is devoted to instructions or to data. That is, the configuration register 60 bit controls whether information is shuttled between the memory submodule and either bus 30 or bus 40. A bit from configuration register 61, on the other hand, controls whether a memory submodule is devoted to cache memory or to SRAM. That is, this bit controls whether a memory submodule participates in a cache memory access or not.

Additionally, the interface circuits are coupled to a controller 50 through lines 32-1, 32-2, 32-3, ..., 32-N and lines 33-1, 33-2, 33-3, ..., 33-N. More specifically, the information from lines 32-1 and all subsequent lines 32-k, k=2, 3, ..., N-1, ripples through until it arrives at controller 50 from line 32-N. The information communicated by lines 32-k informs controller 50 when a "hit" occurred, i.e., when data information sought by processor 5 is found in any of the memory submodules. Similarly, the information from lines 33-1 and all subsequent lines 33-k, k=2, 3, ..., N-1, ripples through till it arrives at controller 50 from line 33-N. The information communicated by lines 33-k and arriving at line 33-N informs controller 50 when an instruction "hit" occurred, i.e., when instruction information sought by processor 5 is found in any of the memory submodules. Each of interface circuits 11-k also supply individual control signals to controller 50 on individual lines of busses 37, 70, and 71.

One aspect of this invention is that registers 60 and 61 are addressable, for example via system bus 20, and, therefore, can be controlled by an application running on processor 5. Hence cache memory module 10 is application-programmable. It should be understood, of course, that registers 60 and 61 could be addressable through bus 40 as well.

It may be noted that data bus 40 is bi-directional and, accordingly, data on the information lines can be written into a memory submodule or can be read out of a memory submodule via this bus. Instruction bus 30, on the other hand, is unidirectional, only going out of the cache memory module. Hence, instructions can only be read out of the memory submodules by processor 5. Both instructions and data cache can be written into the memory submodules or read from the memory submodules through the system bus 20, which is also bi-directional.

FIG. 3 presents a diagram of the interface circuits, illustratively, interface circuit 11-3, which is coupled to and associated with a memory submodule 10-3. Bus 301 represents the address lines of instruction bus 30, while bus 302 represents the information lines of instruction bus 30. Similarly, bus 401 represents the address lines of data bus 40, while bus 402 represents the information lines of data bus 40. Selector 13 is responsive to buses 301 and 401 and, under control of a signal from configuration register 60 on line 35-3, selects either the address on bus 301 or bus 401 so as to dictate whether the associated memory 10-3 submodule is a data submodule or an instruction submodule.

Regardless of whether the submodule is a data submodule or an instruction submodule, the address at the output of selector 13 contains a first portion that corresponds to a line address of memory 10-3. This portion is applied to decoder 14, which decodes the selected line address and applies it to memory submodule 10-3. A second portion of the selected address, so-called tag information, is applied to one comparison input of comparator 15, and a third portion of the selected address, so-called mode control information, is applied to decoding logic 21. In the FIG. 3 embodiment, the mode control portion can be in one of three states: affirmative instruction mode, affirmative data mode, or "don't care." The mode control information is applied to logic circuit 21, which is also responsive to line 36-3, coming from configuration register 61. As indicated above, register 61 may be loaded by a running application, and that application can specify that certain memory submodules should be treated as cache submodules or local SRAM submodules. In the FIG. 3 arrangement, that information is effective only when the mode control is in a "don't care" state. Otherwise, the mode-control signal of selector 13 controls. Thus, element 21 develops a logic '1' output for local SRAM submodules, and a logic '0' for cache memory submodules.

When the memory submodule is employed as a cache memory, in contrast to an SRAM, each line of memory comprises a state field, a tag field, and a data field. The tag field is applied to a second comparison input of comparator 15, and the state field is applied to an "enable" port of comparator 15. When the enable port is at logic '0' the output of comparator 15 is '0' regardless of the signals that are applied to the comparison inputs. When the enable port is at logic '1' the output of comparator 15 is '1' when the two comparison inputs are equal to each other.

The output of logic element 21 is applied to OR gate 17, as is the output of comparator 15. The output of OR gate 17 is applied to AND gate 16 and to AND gate 22. Gate 22 applies its output to OR gate 26 and also controls routing switch 19 which, when enabled, applies the information in the data field from memory submodule 10-3 to bus 402. Another input to OR gate 26 comes from line 32-2 and the output of OR gate 26 forms line 32-3. Similarly, AND gate 16 applies its output to OR gate 25 and also controls routing switch 20 which, when enabled, applies the information in the data field of memory submodule 10-3 to bus 302. Another input to OR gate 25 comes from line 33-2 and the output of OR gate 25 forms line 33-3.

Operation of the FIG. 3 arrangement as a cache memory is effectively the same regardless of whether the memory submodule serves as an instruction cache or as a data cache. The following describes an instruction retrieval process.

When processor 5 seeks to retrieve information from its instruction cache, it places an address on the address lines of instruction bus 30, i.e., on bus 301 of FIG. 3. As indicated above, the address includes a line portion, a tag portion and a control portion that indicates whether the processor is addressing a local SRAM or a cache memory. The address is applied to selector 13, which under control of line 35-3 selects either the signal of line 301 or the signal of line 401. For the sake of the present explanation, it is assumed that the depicted memory submodule 10-3 has been configured to store instructions, that a logic level '0' on line 35-3 selects line 301, and that line 33-3, from configuration register 60, is at logic level '0'. The tag address portion out of selector 13 is applied to comparator 15, and the line address portion is applied to decoder 14. Since the goal is to retrieve data from the instruction cache memory, rather than from local SRAM memory, processor 5 has set the control portion of the address to develop a logic '0' at the output of logic element 21. This allows comparator 15 to control the output of OR gate 17. Concurrently, line 35-3 disables AND gate 22 and enables AND gate 16.

The applied address signals to memory submodule 10-3 output the contents of the selected address. The tag portion of the retrieved contents is applied to a second comparison input of comparator 15, wherein the retrieved tag information is compared to the tag portion supplied by selector 13. When the two match, and the state field is at logic '1', the output of gate 17 assumes logic level '1', and switch 20 is enabled by AND gate 16. Concurrently, the logic '1' level of AND gate 16 propagates through OR gate 25 to output line 33-3. Thus, when processor 5 requests an instruction from its instruction cache memory by applying an address on bus 30, information is retrieved from all memory submodules that are configured to deal with instructions. The memory submodule which, at the specified address, contains tag information that matches the tag information contained in the address field supplied by processor 5, enables its switch 20 and delivers its data field information to bus 302. That represents a "hit", which is communicated to controller 50 via lines 33-3, with that signal rippling through all interface circuits 11-4 through 11-N, as described above. Lines 32-1, 32-2, ... 32-N and 33-1, 33-2, ... 33-N represent two well-known distributed-OR gates and act as the data and instruction cache "hit" lines, respectively. These distributed OR gates may use a well-known "dynamic CMOS logic" technique described in "Principles of CMOS VLSI Design - A Systems Perspective" by Weste&Eshraghian ed. 1, Ch. 5, pp. 163-164, Addison Wesley to improve speed.

A similar sequence of operations occurs when processor 5 requests data from its data cache except that the address of lines 401 is selected by selector 13, gate 16 is disabled while gate 22 is enabled, and a "hit" causes signals to be gated through routing switch 19 to line 32-3.

When processor 5 desires to access the local instruction SRAM or the local data SRAM, the output of logic element 21 is '1' and, therefore, gate 16 is enabled whenever line 35-3 indicates that the memory submodule is to be handling instructions. Similarly, gate 22 is enabled when line 35-3 indicates that the memory submodule is to be handling data. In operation, an address that is applied to decoder 14 via selector 13 retrieves information, and that information is passed by routing switch 20 to bus 302, or by routing switch 19 to bus 402, based on the logic value of line 35-3. In such accesses, i.e., when the output of logic element is a '1' and, therefore, the output of OR gate 17 is a '1', the output of comparator 15 is ignored.

In addition to propagating the "hit" information down lines 33-3 and 32-3 for instruction "hits" and data "hits" respectively, the outputs of gates 16 and 22 are applied to busses 71 and 70, respectively, whenever the memory submodule is not used as a local instruction or local SRAM memory. It may be noted that each module 11-k applies the outputs of gates 27 and 28 to different leads of busses 70 and 71.

It should be noted that element 19 is bi-directional. That is, when enabled, it allows signals to flow from data submodule 10-3 to bus 402, and vice versa. It should also be noted that an access to instruction cache and an access to data cache could occur simultaneously as is common with processor employing the Harvard architecture.

It may also be observed that when K of memory submodules 10 are configured the same way, for example as data cache, they form a K-way set-associative cache that operates as does any conventional set associative cache. A data access causes parallel look-up and compare operations in the tag fields of the K memory submodules, as well as parallel access into the data fields. The memory submodule with a matching tag enables the output of its data field. If none of the memory submodules have a matching tag, a cache miss occurs and the data must be fetched from main memory via the system bus 20. The instruction cache works the same way. Increasing the set-associativity is a well-known technique for improving the performance of the cache.

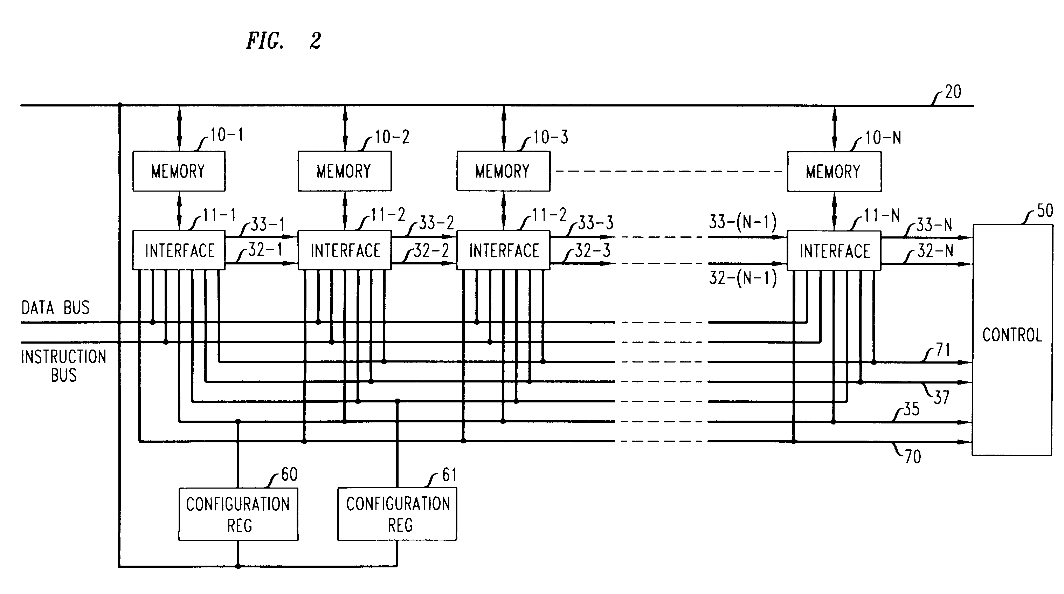

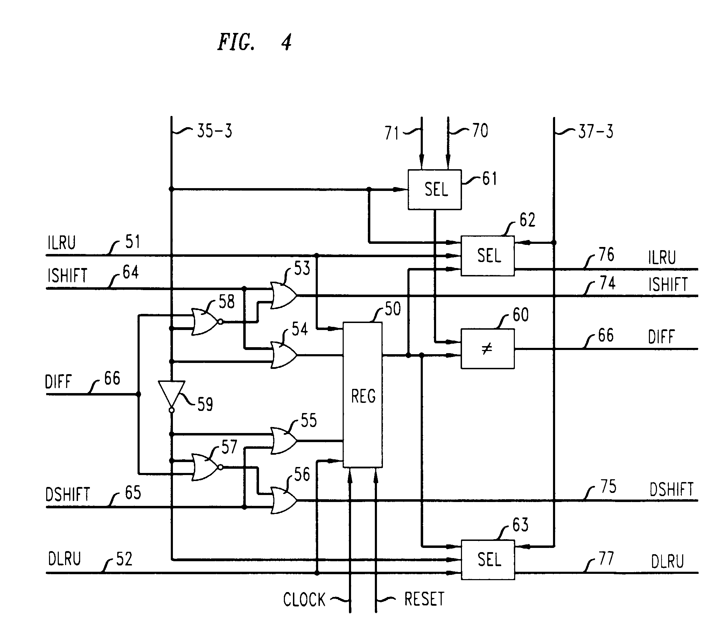

Given N available banks, one can compute the least-recently-used (LRU) memory submodule for both the instruction and data caches with only N registers. FIG. 4 shows one such register (corresponding to interface 11-3) and the circuitry that is associated therewith. Basically, the FIG. 4 circuit comprises two symmetrical circuits: one where the register within the circuit is used to store information about memory submodules that store data and is bypassed by information relating to memory submodules that store instructions, and one where the register within the circuit is used to store information about memory submodules that store instructions and is bypassed by information relating to memory submodules that store data. The circuit is used in one mode or the other.

More specifically, the registers are interconnected to form a stack with identity of the most-recently-used memory submodule being stored in the left-most register of the stack, and the identity of the LRU being found at the right-most register of the stack. The LRU computation is effected by shifting identities to the right whenever new identity is stored. The shifting is carried out until the identity that is stored at the top of the stack is encountered.

Thus, information is presented to register 50 on lines 51 and 52. When the control signal of line 35-3 indicates that register 50 is used for data cache applications, i.e., line 35-3 at logic level "1", NOR gate 54 is not responsive to an active low signal on input line 64, while NOR gate 55 is responsive to an active low signal on input line 65. In response to such an active low signal on line 65, the output of gate 55 becomes active high, which enables the clock to store the data of line 52 in register 50. Similarly, when line 35-3 is at logic level "0", an active low signal on line 64 causes gate 54 to output active high signal, which enables the clock to store the information of line 51 in register 50.

The signals appearing on lines 64 and 65 basically indicate whether a shift of information to the right is permissible. That information arrives from a previous register, and is developed in a manner identical to the manner these signals are developed in the shown register 50. That is, register 50 applies its output to a comparator circuit 60, which receives another input from selector 61. Selector 61 is also responsive to control line 35-3, selecting the "hit" signal of lines 70 or 71. When the selected signals match, for example, when register 50 contains the identity 00010000 and the selected "hit" signal is also 00010000, the output of circuit 60 is active (low). This signal is applied to a next register stage, and as shown in FIG. 4, this signal is applied to NOR gates 58 and 57. When the stage is used for data cache applications, the output of NOR gate 58 is at logic level "0" and therefore, OR gate 53 merely transfers the signals of line 64 to line74. On the other hand, NOR gate 57 inverts the DIF input signal of line 66 and applies this inverted signal to OR gate 56. As long there is no match, the output of gate 56 that is applied to line 75 corresponds to the signal on line 65. When there is a match (low signal) appearing on line 66, the signal applied to line 75 is "1", and this "1" propagates through gates 56 of all subsequent register stages. Finally, isolation of registers 50 between the various stages that allows different register stages to participate in either the data least-recently-used (DLRU) stack or in the instruction least-recently-used (ILRU) stack is effected with selector 62 and 63. When the stage is used for data cache applications, selector 62 outputs on line 76 the signal of line 51 and selector 63 outputs on line 77 the signal of register 50. Conversely, when the stage is used for instruction cache applications, selector 62 outputs on line 76 the signal of register 50 and selector 63 outputs on line 77 the signal of line 52. These actions are taken when signal 37-3, which is the signal of bus 37 that corresponds to the signal from logic element 21 of interface circuit 11-3, is low. When signal 37-3 is high, indicating that the memory submodule 10-3 is used as a local SRAM or as a local instruction memory, selectors 62 and 63 are arranged to pass the signals of lines 51 and 52 to output lines 76 and 77, respectively.

In another embodiment of the invention, the LRU states can be stored in a separate random-access LRU memory. When a cache line is accessed, the line address is used to read the present state from the LRU memory and place it into a register in controller 50. The LRU computation then continues, as per the previous description, so that the register stores the new LRU state. When a different cache line is read from the memory, the contents of that register within controller 50 are written back to the LRU memory and the contents of the different cache line are read out of the LRU memory for updating. Using this approach, only the logic required to computer the LRU for one cache line is needed - and the LRU states for all cache lines are stored in a low-cost memory.

It may be noted that the state field may be a multi-bit field, including for example, coherency information for supporting data caches in a multi-processor system.

The above disclosed the principles of this invention by way of an illustrative embodiment. It should be understood, however, that various modifications could be made without departing from'the scope of this invention. For example, the logic embedded in deciding on the output of logic circuit 21 does not have to give processor 5 precedence over the dictates of register 61 or, conversely, register 61 might not be employed. Other modifications are also possible.

## Claims

1. An arrangement comprising:
an instruction port having an address bus and an information bus;
a data port having ari address bus and an information bus;
a system port having an address bus and an information bus
a plurality of memory submodules coupled to said instruction port, to said data port and to said system port with at least one of said memory submodules adapted for being responsive to signals on said data port concurrently with others of said memory submodules adapted for being responsive to signals on said instruction port; and
a configuration register, coupled to each of said memory submodules, for assigning each of said memory submodules to be responsive to either said data port, or to said instruction port.

2. The arrangement of claim **1** further comprising a controller coupled to said memory submodules.

3. The arrangement of claim **1** further comprising a processor coupled to said data port and coupled to said instruction port.

4. The arrangement of claim **3** wherein said information bus of said instruction port is uni-directional, allowing information to flow from said memory submodules to said processor.

5. The arrangement of claim **1** wherein said configuration register is coupled to a configuration-addressing port of said arrangement.

6. The arrangement of claim 5 wherein said configuration register is loaded by said processor.

7. The arrangement of claim 1 further comprising a second configuration register, coupled to each of said memory submodules, for assigning each of said memory submodules to either cache storage mode or to SRAM storage mode.

8. The arrangement of claim 2 wherein each of said memory submodules comprises a storage submodule and a memory interface circuit.

9. The arrangement of claim 8 wherein said memory interface circuit comprises a selector for applying at least a portion of an address bus of either said data port or said instruction port, under control of a distinct bit from said configuration register.

10. The arrangement of claim 8 further comprising a second configuration register, coupled to one of said ports and to each of said memory submodules, for assigning each of said memory submodules to either cache storage mode or to SRAM storage mode, with each bit in said second configuration register controlling a different one of said interface circuits.

11. The arrangement of claim 10 wherein each of said interface circuits comprises a logic circuit that allows signals appearing on an address bus of said data port or signals appearing on an address bus of said instruction port to over-ride control of said second configuration register.

12. The arrangement of claim 11 wherein each of said interface circuits develops a signal indicative of a successful use of a memory submodule, and that signal is propagated to a next interface circuit, with said signal from a last interface circuit applied to said controller.

13. The arrangement of claim 11 wherein said controller includes a circuit for evaluating identity of a least-recently-used memory submodule that comprises a number of register stages that is equal in number to the number of said memory submodules.

14. A method for operating a processing element that comprises a Harvard-architecture processor coupled to a two-port memory module having an M plurality of memory submodules, comprising the steps of
said processor sending a signal specifying N of said memory modules for data usage and M-N of said memory modules for instruction usage;
said processor sending a signal specifying K of said memory modules for local cache usage and M-K of said memory modules for SRAM usage;
and concurrently accessing said two ports of said memory module;
where M is an integer and N and K are integers between O and M.

15. A dual port memory having M segments, responsive to first signals applied to a port of the memory, for dividing said memory into an instruction memory having K segments and a data memory having M-K segments, where K is specified by said signals.

16. An arrangement comprising:
an instruction port having an address bus and an information bus;
a data port having an address bus and an information bus;
a system port having an address bus and an information bus
a plurality of storage means coupled to said instruction port, to said data port and to said system port with at least one of said storage means adapted for being responsive to signals on said data port concurrently with others of said storage means adapted for being responsive to signals on said instruction port; and
means, coupled to each of said memory submodules, for assigning each of said memory submodules to be responsive to either said data port, or to said instruction port.

17. An arrangement comprising:
a first port having an address bus and an information bus;
a second port having an address bus and an information bus;
a third port having an address bus and an information bus
a plurality of memory means coupled to said first port, to said second port and to said third port with at least one of said memory means adapted to respond to signals on said second port concurrently with others of said memory means adapted to respond to signals on said first port; and
means coupled to each of said memory means, for assigning each of said memory means to be responsive to either said first port, or to said second port.
